# EUROPÄISCHE PATENTANMELDUNG

(11) **EP 3 176 849 A1**
(43) Veröffentlichungstag der Anmeldung: **07.06.2017**
(21) Anmeldenummer: 15197687.5
(22) Anmeldetag: 03.12.2015
(51) Int. Cl.: H01M 2/10, H01M 10/39, H01M 10/6556, H01M 10/613

(54) **VORRICHTUNG ZUR SPEICHERUNG ELEKTRISCHER ENERGIE**

(71) Anmelder: BASF SE, 67056 Ludwigshafen am Rhein (DE)
(72) Erfinder: BENDER, Dietmar, 67459 Boehl-Iggelheim (DE); MEUER, Stefan, 67549 Worms (DE); DUERR, Anna Katharina, 67063 Ludwigshafen am Rhein (DE); BAYER, Domnik, 69121 Heidelberg (DE)
(74) Vertreter: Kudla, Karsten

(57) **Zusammenfassung**

Die Erfindung betrifft eine Vorrichtung zur Speicherung elektrischer Energie, umfassend mindestens zwei elektrochemische Zellen (3), die jeweils einen Raum für Anodenmaterial (7) und einen Raum für Kathodenmaterial (5) umfassen, wobei der Raum für Anodenmaterial (7) und der Raum für Kathodenmaterial (5) durch einen Festelektrolyten (9) getrennt sind, wobei die elektrochemischen Zellen (3) von einem Mantel (17) aus einem mineralischen Material umschlossen sind.

Die Erfindung betrifft weiterhin eine Batterie (21), die mindestens zwei miteinander elektrisch verbundene Vorrichtungen (1) umfasst, wobei die mindestens zwei miteinander elektrisch verbundenen Vorrichtungen (1) in einem gemeinsamen Behälter (27) aufgenommen sind.

## Beschreibung

Die Erfindung geht aus von einer Vorrichtung zur Speicherung elektrischer Energie, umfassend mindestens zwei elektrochemische Zellen, die jeweils einen Raum für Anodenmaterial und einen Raum für Kathodenmaterial umfassen, wobei der Raum für Anodenmaterial und der Raum für Kathodenmaterial durch einen Festelektrolyten getrennt sind.

Vorrichtungen zur Speicherung elektrischer Energie werden im Allgemeinen auch als Batterien oder Akkumulatoren bezeichnet. Andere elektrochemische Vorrichtungen sind zum Beispiel Elektrolysezellen. Diese können beispielsweise zur Herstellung von Alkalimetallen aus geeigneten Alkalimetalle enthaltenden Salzen eingesetzt werden.

Die Erzeugung elektrischer Energie ist im Falle fossiler Kraftwerke mit der Erzeugung von CO₂ verbunden und hat damit erheblichen Einfluss auf den Treibhauseffekt. Energieerzeugung auf Basis regenerativer Energieträger, zum Beispiel Wind, Sonne, Geothermie oder Wasserkraft vermeidet diesen Nachteil. Diese regenerativen Energieträger sind zeitlich jedoch nicht beliebig lastganggerecht verfügbar. Außerdem differiert gegebenenfalls der Standort der Energieerzeugung vom Ort des Energiebedarfs. Um diesen systembedingten Nachteil zu kompensieren, ist eine Speicherung, Pufferung und gegebenenfalls auch ein Transport der erzeugten Energie erforderlich.

Ein ausschließlich auf erneuerbaren Energien basierendes und dennoch stabiles Stromnetz kann es unter diesen Rahmenbedingungen nicht geben. Daher besteht Bedarf, diese Schwankungen durch kostengünstige und energieeffiziente Systeme mit einem hohen Wirkungsgrad auszugleichen und zu puffern.

Zur Speicherung elektrischer Energie werden derzeit im technischen Maßstab Pumpspeicherkraftwerke verwendet, in denen die potentielle Energie der geodätischen Höhendifferenz des Wassers zur Umwandlung in Strom genutzt wird. Der Aufbau solcher Pumpspeicherkraftwerke ist jedoch durch landschaftliche und ökologische Rahmenbedingungen limitiert. Druckspeicherkraftwerke, in denen die Kompression von Luft zur Energiespeicherung genutzt wird, sind aufgrund ihres vergleichsweise geringen Wirkungsgrades limitiert. Auch andere Formen der Energiespeicherung wie Superkondensatoren oder Schwungräder adressieren andere Zielmärkte, insbesondere Kurzzeitspeicher. Eine effektive Speicherung elektrischer Energie ist insbesondere mit Batterien möglich, die in verschiedenen Konzepten technisch realisiert wurden. Hierbei ist es insbesondere notwendig, Batterien einzusetzen, die wiederaufladbar sind.

Entsprechende Batterien, die auf Basis eines geschmolzenen Alkalimetalls als Anode und einem kathodischen Reaktionsteilnehmer, im Allgemeinen Schwefel, arbeiten, sind zum Beispiel in DE-A 26 35 900 oder DE-A 26 10 222 bekannt. Hierbei werden das geschmolzene Alkalimetall und der kathodische Reaktionsteilnehmer durch einen für Kationen durchlässigen Festelektrolyten getrennt. An der Kathode erfolgt eine Reaktion des Alkalimetalls mit dem kathodischen Reaktionsteilnehmer. Dies ist zum Beispiel bei Einsatz von Natrium als Alkalimetall und Schwefel als kathodischem Reaktionsteilnehmer die Reaktion von Natrium und Schwefel zu Natriumpolysulfid. Zum Laden der Batterie wird das Natriumpolysulfid an der Elektrode durch Aufbringen elektrischer Energie wieder in Natrium und Schwefel getrennt.

Zur Vergrößerung der Speicherfähigkeit von Batterien auf Basis von einem geschmolzenen Alkalimetall und einem kathodischen Reaktionsteilnehmer werden Batterien eingesetzt, bei denen durch zusätzliche Vorratsbehälter die Menge an den eingesetzten Reaktanden vergrößert wird. Zum Entladen wird das flüssige Natrium dem Festelektrolyten zugeführt. Das flüssige Natrium dient gleichzeitig als Anode und bildet Kationen, die durch den kationenleitenden Festelektrolyten zur Kathode transportiert werden. An der Kathode wird der an die Kathode anströmende Schwefel zu Polysulfid reduziert, also mit den Natriumionen zu Natriumpolysulfid umgesetzt. Das entsprechende Natriumpolysulfid kann in einem weiteren Behälter gesammelt werden. Alternativ ist es auch möglich, das Natriumpolysulfid mit dem Schwefel gemeinsam im Behälter um den Kathodenraum zu sammeln. Aufgrund des Dichteunterschiedes steigt der Schwefel auf und setzt sich das Natriumpolysulfid ab. Diese Dichtedifferenz kann auch dazu genutzt werden, eine Strömung entlang der Kathode zu bewirken. Ein entsprechendes Batteriedesign ist zum Beispiel in WO 2011/161072 beschrieben.

In Batterien, die mit einem Redox-System auf Basis von Natrium und Schwefel arbeiten, kann mit einem hohen Wirkungsgrad von ungefähr 90% bei der Umsetzung von Natrium und Schwefel zu Natriumpolysulfid elektrische Energie gewonnen werden. Zum Laden der Batterie wird der Vorgang durch Einspeisung von Strom umgekehrt und das Natriumpolysulfid wird zu Schwefel und Natrium gespalten. Da alle elektrochemischen Reaktanden schmelzflüssig vorliegen und der optimale Leitfähigkeitsbereich der ionenleitenden keramischen Membran erst bei höheren Temperaturen erreicht wird, liegt die Betriebstemperatur einer solchen Batterie üblicherweise bei etwa 300°C.

Um große Spannungen bereitstellen zu können, ist es notwendig, mehrere elektrochemische Zellen miteinander elektrisch zu verbinden. Da unterschiedliche Temperaturen einzelner Zellen zu unterschiedlichen Innenwiderständen und damit zu unterschiedlichen Beladungs- beziehungsweise Entladungszuständen führen und dies wiederum eine Verringerung der Lebensdauer zur Folge hat, ist es notwendig die miteinander verschalteten elektrochemischen Zellen gleichmäßig zu temperieren. So werden zum Beispiel bei der Entladung etwa 90% der chemisch gespeicherten Energie in elektrische Energie umgewandelt und die restlichen 10% in Wärme. Diese entstehende Wärme muss an die Umgebung abgegeben werden, um die Betriebstemperatur konstant zu halten. Hierzu erfolgt derzeit insbesondere eine Kühlung mit Luft, wie zum Beispiel in DE-A 3247969, DE-A 2610222 oder DE-A 4029901 beschrieben.

Aus EP-A 454017 ist es bekannt, die elektrochemischen Zellen in eine Vergussmasse einzubetten und zwischen den elektrochemischen Zellen Latentwärmespeicher zur Temperierung vorzusehen. Alternativ zur Vergussmasse ist ebenfalls beschrieben, die elektrochemischen Zellen in ein grobkörniges Schüttgut einzubetten und dieses mit einem gasförmigen oder flüssigen Temperiermedium zu durchströmen.

Nachteil der aus dem Stand der Technik bekannten Kühlung mit Luft ist jedoch, dass Luft ein nur schlechter Wärmeleiter ist. Hierdurch ist es notwendig, die elektrochemischen Zellen mit großen Mengen an Luft zu umströmen, was wiederum ein großes Gebläse und große Gebläseleistungen erfordert. Zudem besteht bei hohen Luftströmungen eine starke und unerwünschte Geräuschentwicklung. Wesentlich effizienter ist der Einsatz flüssiger Temperiermedien, wobei im Falle der Temperaturen in Natrium-Schwefel-Batterien Öle oder Salzschmelzen eingesetzt werden. Aus Sicherheitsgründen sollte das Öl oder die Salzschmelze jedoch nicht in direkten Kontakt mit dem Material der Zelle kommen, da bei einer Undichtigkeit im Mantel das Öl gezündet werden könnte oder das Salz der Salzschmelze mit dem Zellinhalt reagieren könnte.

Aufgabe der vorliegenden Erfindung ist es daher, eine Vorrichtung zur Speicherung elektrischer Energie bereitzustellen, bei der eine ausreichende Kühlung möglich ist und die die Nachteile aus dem Stand der Technik nicht aufweist.

Gelöst wird die Aufgabe mit einer Vorrichtung zur Speicherung elektrischer Energie, umfassend mindestens zwei elektrochemische Zellen, die jeweils einen Raum für Anodenmaterial und einen Raum für Kathodenmaterial umfassen, wobei der Raum für Anodenmaterial und der Raum für Kathodenmaterial durch einen Festelektrolyten getrennt sind, und wobei die elektrochemischen Zellen von einem Mantel aus einem mineralischen Material umschlossen sind.

Der Vorteil des Mantels aus mineralischem Material ist, dass das mineralische Material inert ist gegenüber den in den Zellen eingesetzten Materialien. Zudem weisen die mineralischen Materialien eine große Festigkeit auf und haben im Allgemeinen eine gute Wärmeleitfähigkeit im Bereich von 1 bis 5 W/mK. Die gute Wärmeleitfähigkeit des mineralischen Materials erlaubt eine gute Wärmeabfuhr zur Kühlung der elektrochemischen Zellen. Weiterhin ist es möglich, die elektrochemischen Zellen so mit dem Mantel aus mineralischem Material zu umschließen, dass der Mantel in Kontakt mit den einzelnen elektrochemischen Zellen ist. Hierdurch wird die Wärmeleitung von den Zellen in den Mantel ebenfalls verbessert, da sich keine isolierende Gasschicht zwischen dem Mantel aus mineralischem Material und den einzelnen elektrochemischen Zellen befindet.

Im Rahmen der vorliegenden Erfindung ist unter Anodenmaterial ein flüssiger Reaktand zu verstehen, der auf der Anodenseite beim Entladen zugeführt wird. Bevorzugt ist das Anodenmaterial elektrisch leitend, insbesondere wird als Anodenmaterial ein flüssiges Alkalimetall eingesetzt. Geeignete Anodenmaterialien sind zum Beispiel Lithium, Natrium oder Kalium, insbesondere Natrium oder Kalium und ganz besonders bevorzugt Natrium.

Das Kathodenmaterial ist ein flüssiger Reaktionspartner, der mit dem Anodenmaterial elektrochemisch umgesetzt wird. Üblicherweise bildet das Kathodenmaterial mit dem Anodenmaterial durch chemische Reaktion ein Salz. Geeignete Kathodenmaterialien sind zum Beispiel Schwefel oder Polysulfide. Das Kathodenmaterial wird dabei flüssig eingesetzt. Weiterhin eignet sich als Kathodenmaterial auch ein Gemisch aus Natriumchlorid und einem Metall der 8. Nebengruppe, beispielsweise Eisen, Nickel oder Kobalt, in Kombination mit einem schmelzflüssigen Elektrolyten wie NaAlCl₄. Bevorzugt sind jedoch Schwefel oder Polysulfide.

Weitere geeignete Kathodenmaterialien in Verbindung mit einem Alkalimetall als Anodenmaterial sind zum Beispiel Stickstoffoxide (NO oder NO₂), ein Halogen, beispielsweise Chlor, Jod oder Brom, ein Metallhalogenid, beispielsweise NiCl₂ oder FeCl₃, ein Metalloidhalogenid, beispielsweise SiCl₄ oder Si₂Cl₆. Auch ist der Einsatz eines festen Salzes, das sein Redoxpotential ändern kann, möglich. Ein solches Salz ist zum Beispiel NaFePO₄.

Der Festelektrolyt der elektrochemischen Zellen ist üblicherweise mit einer porösen Elektrode verbunden, wobei durch die poröse Elektrode ein Transport vorzugsweise allein aufgrund von Konvektion und Diffusion erfolgt. Hierdurch ist es möglich, auf Pumpen oder ähnliche Vorrichtungen, mit denen ein erzwungener Transport gefördert wird, zu verzichten. Der Nachteil solcher Vorrichtungen ist im Allgemeinen, dass diese elektrische Energie benötigen, die dann nicht mehr zur Verfügung steht. Weiterer Nachteil von Vorrichtungen für erzwungenen Transport ist deren Verschleiß.

Als Festelektrolyt wird in einer bevorzugten Ausführungsform eine Keramik eingesetzt. Besonders geeignet als Material für den Festelektrolyten ist β-Aluminiumoxid oder β"-Aluminiumoxid. Dieses wird vorzugsweise stabilisiert, beispielsweise mit MgO oder Li₂O.

Alternativ zu β-Aluminiumoxid oder β"-Aluminiumoxid können auch andere keramische Materialien als Festelektrolyt eingesetzt werden. Zum Beispiel kann die als NASCION^{®} bezeichnete Keramik, deren Zusammensetzung in EP-A 0 553 400 angegeben ist, eingesetzt werden. Alternativ zu Keramiken können auch Natriumionen-leitende Gläser oder Zeolithe und Feldspate eingesetzt werden. Insbesondere bevorzugt sind jedoch Natrium-β"-Aluminiumoxid, Natrium-β-Aluminiumoxid, Natrium-β/β"-Aluminiumoxid. Die Natriumionen-leitenden Keramiken sind bevorzugt einseitig unten geschlossene, oben offene, dünnwandige Rohre, wenn der Festelektrolyt zylinderförmig ausgebildet ist. In diesem Fall ist es weiterhin bevorzugt, wenn die Rohre einen Durchmesser von 20 bis 80 mm und eine Länge im Bereich von 0,5 m bis 2 m aufweisen. Die Wandstärke liegt vorzugsweise im Bereich von 0,5 mm bis 3 mm, insbesondere im Bereich von 1,5 mm bis 2 mm.

Die poröse Elektrode wird aus einem Material gefertigt, das gegenüber den bei der elektrochemischen Reaktion eingesetzten Substanzen inert ist. Als Material für die Elektrode eignet sich zum Beispiel Kohlenstoff, insbesondere in Form von Graphit.

Damit die an der elektrochemischen Reaktion beteiligten Stoffe durch die Elektrode strömen können, ist diese üblicherweise porös. Dies wird zum Beispiel dadurch erzielt, dass das Material der porösen Elektroden in Form eines Filzes oder Vlieses vorliegt. Ganz besonders bevorzugt ist die Elektrode eine Graphitfilzelektrode.

Um einen direkten Kontakt der Elektrode mit dem Festelektrolyten zu vermeiden, ist zwischen der porösen Elektrode und dem Festelektrolyten vorzugsweise eine hinsichtlich Elektronenleitung isolierende poröse mit flüssigem Elektrolyten gefüllte Schicht angeordnet. Als "hinsichtlich Elektronenleitung isolierend" wird dabei ein Material verstanden, das einen spezifischen Widerstand von mindestens 10⁸ Ohm*cm und insbesondere von mindestens 10⁹ Ohm*cm aufweist. Das Material für die isolierende Schicht ist dabei so zu wählen, dass Kationen, die durch den Festelektrolyten transportiert werden, auch durch die isolierende Schicht an die poröse Elektrode gelangen können, und die Elektronenleitfähigkeit vernachlässigbar klein ist. Geeignet als elektrisch isolierendes Material, das zwischen dem Festelektrolyten und der Elektrode angeordnet ist, sind zum Beispiel eloxiertes oder Sulfid-passiviertes Aluminiumgewebe, keramische Fasern, Glasfasern oder Kohlegewebe. Durch das elektrisch nicht leitende Material wird vermieden, dass sich nicht leitendes Kathodenmaterial, beispielsweise Schwefel, auf dem Festelektrolyten ablagert und dadurch beim Laden den Stromfluss limitiert.

Um den Raum für flüssiges Natrium innerhalb der elektrochemischen Zelle zu reduzieren und damit im Falle einer unkontrollierten Reaktion zum Beispiel bei Bruch des Festelektrolyten die Menge an Alkalimetall zu verringern, die mit dem Schwefel reagieren kann, ist es bevorzugt, im Raum für das Anodenmaterial einen Verdränger vorzusehen. Eine elektrochemische Zelle mit einem solchen Verdränger ist zum Beispiel in WO-A 2013/186213 beschrieben.

Die einzelnen elektrochemischen Zellen sind erfindungsgemäß von einem Mantel aus einem mineralischen Material umschlossen. Als mineralisches Material wird besonders bevorzugt Beton eingesetzt. Vorteil der Verwendung von Beton als mineralischem Material ist, dass dieser auf einfache Weise formgebend verarbeitet werden kann. Zudem können durch geeignete Formen beliebige Gestaltungen hergestellt werden, so dass eine Ummantelung beliebig gestalteter elektrochemischer Formen möglich ist. Durch Zugabe geeigneter Additive ist es insbesondere auch möglich, den Beton feuerfest oder hitzebeständig auszurüsten. Geeignete Additive und hitze- oder feuerbeständige Betonsorten sind dem Fachmann bekannt.

Üblicherweise wird die Hitzebeständigkeit von Beton durch ein Gemenge aus wärme- und hitzebeständigen, feuerfesten, porigen oder dichten Zuschlagstoffen erhöht. In der Regel werden hierzu zum Beispiel Hüttensand, Hochofenschlacke, Tabulartonerde oder auch Bindemittel eingesetzt, mit denen der Beton Temperaturen von 500 bis 2000°C standhalten kann. Wenn der Beton solch hohen Temperaturen standhalten kann, wird dieser auch als Feuerbeton bezeichnet. Dieser gehört zu den Spezialbetonen und kann für tragende und nichttragende Bau- und Anlagenteile sowie für Fertigteil- oder Stahlbetonkonstruktionen verwendet werden. Fertigteile aus Feuerbeton werden in der Regel vortemperiert, um den größten Teil des Wassers auszutreiben. Derzeit bekannte Einsatzbereiche sind zum Beispiel der Bau von Kernreaktoren, Bauteile für Öfen in Industrieanlagen, Schornsteine, nicht brennbare Behälter, Isolierungen und tragende Bauteile.

Da die elektrochemischen Zellen, insbesondere elektrochemische Zellen mit Natrium als Anodenmaterial und Schwefel als Kathodenmaterial, üblicherweise bei einer Temperatur im Bereich von 300 bis 350°C betrieben werden, ist es weiterhin bevorzugt, für den Mantel aus mineralischem Material einen hitzebeständigen Beton einzusetzen. Hierdurch wird insbesondere sichergestellt, dass der Mantel aufgrund der hohen Temperaturen nicht geschädigt wird.

Für eine sinnvolle Nutzung ist es weiterhin vorteilhaft, wenn das mineralische Material für den Mantel gegenüber Temperaturen im Bereich von 300 bis 400 °C über einen Zeitraum von 10 bis 15 Jahren beständig ist. Dies bedeutet, dass das mineralische Material in diesem Zeitraum keine Risse bildet, absprengt oder zertreibt. Auch müssen Volumenänderungen während des Aufheizens oder des Abkühlens innerhalb vorgegebener Grenzen bleiben. Idealerweise sind die Volumenänderungen des mineralischen Materials auf die Volumenänderungen der Rohrleitungen mit dem Wärmeträgermedium abgestimmt, so dass Spannungen innerhalb des Mantels aus mineralischem Material vermieden werden. Geeignete mineralische Materialien sind zum Beispiel feuerfeste Baustoffe wie Schamotte-, Silka- oder Magnesit-Erzeugnisse. Neben den erprobten keramischen, feuerfesten Baustoffen sind die hydraulisch oder auch chemische gebundene hitzebeständige oder feuerfeste Betone, auch als Feuerbeton bezeichnet, besonders geeignet. Wie andere betonartige Materialien lässt sich Feuerbeton nach verschiedenen Gesichtspunkten einteilen, zum Beispiel nach Art der Zementbindung, nach seinem chemischmineralogischen Charakter oder nach Art der Granulatkomponenten. Eine Einteilung nach Anwendungsgrenztemperatur ist ebenfalls möglich. Danach gilt Feuerbeton bei Anwendungsgrenztemperaturen im Bereich von 350 bis 600°C als wärmebeständig, bei Anwendungsgrenztemperaturen im Bereich von 600 bis 1.100°C als hitzebeständig, bei Anwendungsgrenztemperaturen im Bereich von 1.100 bis 1.500°C als feuerfest und bei Anwendungsgrenztemperaturen über 1.500°C als hochfeuerfest.

Als Bindemittel für die Feuerbetone können Portlandzement, Eisenportlandzement, Hochofenzement und Tonerdeschmelzezement eingesetzt werden. Die Feuerfestigkeit der Feuerbetone setzt besondere, feuerfeste Zuschläge voraus. Die Feuerbetone mit hydraulischen Bindemitteln unterscheiden sich in technologischer Sicht nur wenig von üblichen Betonen, so dass sie nach den gleichen Grundsätzen zusammengesetzt, hergestellt, eingebaut und nachbehandelt werden können. Wichtig für die erfindungsgemäßen Module ist, dass großformatige Betonelemente beliebiger Form möglich sind. Dem Erhitzen des Betonsteins nach dem Guss und einer ersten Phase des Abbindens kommt besonders Bedeutung zu. Beim Erwärmen des Betons laufen verschiedene Reaktionen und Phasenbildungen ab. Das freie und auch das chemisch gebundene Wasser des Betons wird ausgetrieben. Bei gleichmäßiger Erhitzung verläuft dieser Vorgang nicht kontinuierlich sondern der Beton verliert je nach Bindung des Wassers in bestimmten Temperaturbereichen mehr oder weniger Wasser. Die Vorgänge sind fließend, jedoch ist zu erkennen, dass zwischen 100 bis 200 °C das freie physikalisch absorbierte Wasser entweicht und bei Temperaturen zwischen 400 bis 600 °C ein Teil des chemisch gebundenen Wassers abgegeben wird. Das Austreiben des Wassers führt zu einer Volumenminderung, die im Bereich von 0,6 bis 1,0% liegen kann. Erfindungsgemäß bevorzugt sind Betone mit einer auf die Ausdehnung des als Rohrleitungsmaterial verwendeten Metalls angeglichenen Wärmeausdehnung. Auch die Druckfestigkeit des Betons ist temperaturabhängig und wird im Wesentlichen vom Hydratationsgrad des Betons bestimmt. Im Temperaturbereich von 300 bis 400 °C liegt die Druckfestigkeit nach einer anfänglichen Erhöhung um bis zu 25% nahe dem Ausgangswert bei Raumtemperatur.

Für hitzebeständige Betone können auch nichtfeuerfeste mineralische Zuschläge verwendet werden. Geeignet sind Diabas und Basalt, die sich beim Erhitzen verhältnismäßig wenig ausdehnen. Bims, Andesit, verschiedene Schlackearten, Ziegelsplitt, Blähtone oder Perlit sind ebenfalls als Zuschlag geeignet. Aufgrund der Arbeitstemperatur von 300 bis 400 °C können sogar Quarzsande und Quarzkiese zugesetzt werden. Für feuerfeste und hochfeuerfeste Betone werden Zuschläge mit hohem Schmelzpunkt wie Korund, Sinterdolomit Chromerze oder Siliciumcarbid zugesetzt. Die üblichen Feuerbetone unterscheiden sich in ihrer Zusammensetzung wenig von üblichen Schwerbetonen. Der Zementgehalt soll 300 bis 400 kg/m³ betragen, die Größtkörner sollten eine maximale Ausdehnung von 30 mm nicht übersteigen. Der Wasserzusatz ist so zu bemessen, dass ein gut verarbeitbarer, knapp weicher Beton entsteht. Bei größerem Zusatz an mehlfreien Stoffen muss mehr Wasser zugesetzt werden. Es ist darauf zu achten, dass der Beton bezüglich seiner Viskosität so beschaffen ist, dass ein Formteil von hoher Güte ohne Lufteinschlüsse entsteht.

Das Anheizen entscheidet im erheblichen Umfang über die Güte des Betonmoduls. Es sollte nach weitgehender Hydratation des Betons unter Beachtung besonderer Vorkehrungen erfolgen, da die Haltbarkeit durch die Art der Temperatursteigerung entscheidend beeinflusst wird. Hierbei wird das Betonmodul vorzugsweise zunächst mit einer Aufheizrate von vorzugsweise 1 bis 10 K/h auf eine Temperatur von 150 °C erwärmt. Bei dieser Temperatur verbleibt das Betonmodul vorzugsweise 1 bis 10 Tage. Danach wird das Betonmodul mit einer Geschwindigkeit von vorzugsweise 2 bis 20 K/h auf 400 °C erhitzt und wird 2 bis 10 Tage auf dieser Temperatur gehalten. Die Erwärmung erfolgt dabei in geeigneten Kammern oder Öfen beziehungsweise über im Betonmodul verbaute Rohre, die von einem Temperiermedium durchströmt werden. Beim ersten Erhitzen überlagert sich das Schwinden des Zementsteins mit der Ausdehnung des Zuschlags. Durch Zugabe keramischer Stabilisatoren wird das Schwinden des Zementsteins stark herabgesetzt. Das Schwinden wird durch das Mischungsverhältnis von Zement zu Zuschlag wesentlich beeinflusst und kann durch Vorversuche optimiert werden.

In einer Ausführungsform der Erfindung weist der Mantel aus dem mineralischen Material einen abnehmbaren Deckel auf oder ist an der Oberseite offen, so dass die einzelnen elektrochemischen Zellen aus dem Mantel aus mineralischem Material entnommen und ausgetauscht werden können. Dies kann zum Beispiel dann notwendig sein, wenn einzelne elektrochemische Zellen ausfallen oder beschädigt sind. Wenn ein Deckel vorgesehen ist, ist dieser vorzugsweise ebenfalls aus mineralischem Material gefertigt. Besonders bevorzugt wird dabei das gleiche mineralische Material für Deckel und Mantel eingesetzt.

Um den Deckel von dem Mantel aus mineralischem Material abheben zu können, ohne Anschlüsse und Leitungen zu schädigen, beispielsweise elektrische Anschlüsse oder Leitungen zur Zufuhr oder Entnahme von Wärmeträgermaterial, ist es bevorzugt, die Anschlüsse und Leitungen über den Boden des Mantels aus mineralischem Material zu führen. Hierdurch kann auf jegliche Leitungen oder Anschlüsse im Bereich des Deckels verzichtet werden.

Zur Herstellung des Mantels aus dem mineralischen Material ist es möglich, die elektrochemischen Zellen mit dem mineralischen Material zu umgießen oder den Mantel aus dem mineralischen Material aus vorgefertigten Modulen aufzubauen. Vorteil des Umgießens der elektrochemischen Zellen mit dem mineralischen Material ist, dass der Mantel optimal an die Form der elektrochemischen Zellen angepasst ist und so ein optimaler Kontakt des mineralischen Materials des Mantels mit den elektrochemischen Zellen ermöglicht wird. Dies hat den weiteren Vorteil, dass ein guter Wärmeüberübergang von den elektrochemischen Zellen an den Mantel aus dem mineralischen Material sichergestellt werden kann. Demgegenüber hat die Fertigung von Modulen aus dem mineralischen Material, aus dem der Mantel aufgebaut wird, den Vorteil, dass eine unabhängige Fertigung der Module möglich ist und so die einzelnen Module für die Fertigung bereits während der Herstellung der elektrochemischen Zellen parallel hergestellt werden können. Zudem ist es möglich, Module herzustellen und zu lagern, um diese bei Bedarf nutzen zu können. Um auch hier einen guten Kontakt des Mantels mit den elektrochemischen Zellen zu erhalten, ist es dabei bevorzugt, wenn die Innenseiten der Module als Negativform zu den elektrochemischen Zellen geformt werden.

Die Herstellung des Mantels aus dem mineralischen Material durch Umgießen der elektrochemischen Zellen oder der Module zur Herstellung des Mantels erfolgt auf übliche Weise wie bei der Herstellung konventioneller Bauteile mit Schalungen und gegebenenfalls Abstandshaltern, die die Positionierung der einzelnen Teile der Zellen eines Moduls sicherstellen. Ein Modul umfasst dabei die elektrochemischen Zellen, die von einem einzelnen Mantel umschlossen sind.

Für eine ausreichende Dichtigkeit des Mantels und damit einer ausreichenden Güte des Mantels ist auf eine sorgfältige Verdichtung zu achten. Die Wahl eines geeigneten Rüttlers zum Verdichten des Betons mit der richtigen Frequenz und dem richtigen Durchmesser ist für das vollständige Verdichten wichtig. Der Durchmesser des Rüttlers muss dabei gegebenenfalls auch unter Beachtung der elektrochemischen Zellen und ihrer Anbauten sowie der Leitungen gewählt werden, damit diese Teile beim Verdichten möglichst nicht intensiv berührt und dadurch möglicherweise beschädigt werden.

Die Anzahl der elektrochemischen Zellen, die ein Modul bilden und von dem Mantel aus mineralischen Material umschlossen sind, ist frei wählbar. Aufgrund von Gewicht und Handlichkeit sind Module mit 5 bis 100 elektrochemischen Zellen bevorzugt. Die Geometrie des Mantels aus mineralischem Material ist dabei frei wählbar. Aufgrund der möglichen Raumnutzung in einem Container und auch um mehrere Module nebeneinander oder übereinander positionieren zu können, ist eine quadratische oder rechteckige Grundform und eine würfel- oder quaderförmige Gestaltung des Mantels bevorzugt.

Um die Speicherkapazität der Batterie zu vergrößern, wird wie vorstehend beschrieben, das Anodenmaterial und das Kathodenmaterial in geeigneten Speichern, die mit dem Raum für das Anodenmaterial beziehungsweise dem Raum für das Kathodenmaterial verbunden sind, vorgehalten werden. In einer bevorzugten Ausführungsform sind der Speicher für das Anodenmaterial und/oder der Speicher für das Kathodenmaterial ebenfalls von dem Mantel aus dem mineralischen Material umschlossen.

Weiterhin ist es auch möglich, dass der Raum für das Kathodenmaterial in den elektrochemischen Zellen ausreichend groß dimensioniert ist, um auf einen separaten Speicher für das Kathodenmaterial verzichten zu können. Aus Sicherheitsgründen ist es jedoch auch in diesem Fall vorteilhaft, den Raum für das Anodenmaterial möglichst klein zu halten, wozu zum Beispiel der vorstehend beschriebene Verdränger eingesetzt werden kann. Dies erfordert jedoch für die Bereitstellung einer ausreichend großen Menge an Anodenmaterial den Einsatz eines Vorratsbehälters für das Anodenmaterial. Diesen mit dem Mantel aus dem mineralischen Material zu umschließen hat den Vorteil, dass auch bei einer Leckage kein Anodenmaterial an die Umgebung austreten kann.

Wenn ein zusätzlicher Speicher für Anodenmaterial eingesetzt wird, ist es möglich, für jede einzelne elektrochemische Zelle einen solchen Speicher vorzusehen. Bevorzugt ist es jedoch, wenn die Räume für Anodenmaterial von jeweils mindestens zwei elektrochemischen Zellen mit einem gemeinsamen Speicher für Anodenmaterial verbunden sind. Besonders bevorzugt ist es, alle elektrochemischen Zellen, die mit dem Mantel aus mineralischem Material umschlossen sind, mit einem gemeinsamen Speicher für Anodenmaterial zu verbinden. Hierbei kann ein separater Behälter genutzt werden, der mit dem Anodenmaterial befüllt ist und der von dem Mantel aus mineralischem Material umschlossen wird.

Um im Falle einer Leckage zu verhindern, dass Anodenmaterial oder Kathodenmaterial auslaufen kann, ist es weiterhin bevorzugt, wenn im Mantel aus mineralischem Material mindestens ein Aufnahmebehälter aufgenommen ist, in den bei einer möglichen Leckage das Anodenmaterial, das Kathodenmaterial und/oder das Reaktionsprodukt aus Anodenmaterial und Kathodenmaterial ablaufen kann. Hierbei ist jedoch darauf zu achten, dass kein gemeinsamer Aufnahmebehälter für Anodenmaterial und Kathodenmaterial verwendet wird, da in dem Fall, dass Anodenmaterial und Kathodenmaterial in den Aufnahmebehälter fließen eine chemische Reaktion zwischen Anodenmaterial und Kathodenmaterial erfolgt, die bei Verwendung von Alkalimetall und Schwefel stark exotherm ist, und so zu einer unkontrollierten Reaktion und Erwärmung der Vorrichtung zur Speicherung elektrischer Energie führen kann.

Vorzugsweise befinden sich der Speicher für Anodenmaterial, und sofern vorhanden der Speicher für Kathodenmaterial und der mindestens eine Aufnahmebehälter unterhalb der elektrochemischen Zellen im Mantel aus mineralischem Material, insbesondere im Boden des Mantels aus mineralischem Material. Dies hat den Vorteil, dass die einzelnen elektrochemischen Zellen von oben zugänglich bleiben.

Um ausreichend Wärme abführen zu können oder im Falle des Ladens oder in Ruhephasen die Temperatur in der Vorrichtung halten zu können, sind in einer bevorzugten Ausführungsform Kanäle in dem Mantel aus mineralischem Material ausgebildet, die von einem Wärmeträgermedium zur Temperierung der elektrochemischen Zellen durchströmt sind. Bevorzugt sind die Kanäle in Form von Leitungen gestaltet, die in dem Mantel aus dem mineralischen Material aufgenommen sind. Als Material für die Leitungen wird vorzugsweise Kupfer oder Edelstahl genutzt. Innerhalb des Mantels eines Moduls werden die Leitungen dabei vorzugsweise einteilig ohne Verbindungsstellen, beispielsweise durch Schweißen, Schrauben oder Löten, gefertigt. Hierdurch werden mögliche Quellen für Leckagen minimiert. Der Durchmesser der Rohre, die als Leitungen für das Wärmeträgermedium eingesetzt werden, liegt vorzugsweise im Bereich von 6 bis 25 mm. Bei Einsatz von üblichen Rohren mit Durchmesserangaben in Zoll liegt der Durchmesser vorzugsweise im Bereich von 0,25 bis 1 Zoll.

Die Kanäle oder Leitungen, durch die das Wärmeträgermedium geführt wird, können in jeder beliebigen Form im Mantel aus dem mineralischen Material verlaufen. Bevorzugt ist es, wenn die Kanäle oder Leitungen linear oder wellenförmig verlaufen. Der Verlauf der Leitungen, die vom Wärmeträgermedium durchströmt werden, wird dabei vorzugsweise so gewählt, dass eine möglichst homogene Temperierung der Module möglich ist.

Um eine Schädigung der elektrochemischen Zellen und der Leitungen, die vom Wärmeträgermedium durchströmt werden, durch mögliches Abplatzen von Betonstücken oder eine Rissbildung im Mantel, die jeweils durch Temperaturänderungen verursacht werden können, zu vermeiden, ist es bevorzugt, wenn der Abstand der Leitungen im Beton zu den elektrochemischen Zellen mindestens 10 mm beträgt.

In einer Ausführungsform sind die Kanäle, die von einem Wärmeträger zur Temperierung der elektrochemischen Zellen durchströmt sind, in separaten Modulen ausgebildet, die mit den übrigen Modulen zur Bildung des Mantels aus dem mineralischen Material thermisch leitend verbunden sind. In diesem Fall besteht die Möglichkeit, die Module, in denen die Kanäle ausgebildet sind anstelle von Schalungselementen zur Herstellung des Mantels aus dem mineralischen Material einzusetzen. Im Unterschied zu Schalungselementen werden die Module, in denen die Kanäle ausgebildet sind nach der Fertigung jedoch nicht entfernt sondern bleiben Teil des Mantels. Alternativ können die Leitungen jedoch auch in den Mantel eingegossen sein.

Der Kühl-/Heizkreislauf des einsatzbereiten Moduls ist so vorzugsweise so ausgelegt, dass unabhängig von dessen Größe innerhalb von 12 Stunden bis 10 Tagen von Raumtemperatur auf Betriebstemperatur der elektrochemischen Zellen, bei Natrium/Schwefel-Zellen zum Beispiel 300 bis 350 °C, aufgeheizt werden kann. Eine moderate Aufheizraterate und Abkühlrate ist bei jedem An- und Abfahrvorgang bevorzugt, um Spannungen innerhalb des Betonmoduls zu minimieren und Risse zu vermeiden. Eine Temperaturobergrenze von 350 °C ist bevorzugt, da bis zu dieser Temperatur mit geeigneten Thermalölen drucklos gearbeitet werden kann. Bei Temperaturen von 400 °C sind Dampfdrücke von ca. 10 bar zu beherrschen. Bei der Auswahl des Thermalöls ist auf dessen thermische Stabilität zu achten, da diese thermisch zersetzt werden können. Öle auf Mineralölbasis sind im Allgemeinen bis zu Betriebstemperaturen von 300 °C bei Standzeiten von 10 Jahren und mehr einsetzbar, hochwertige synthetische Öle sind dagegen bis 400 °C stabil. Zu dieser Klasse zählen zum Beispiel eutektische Mischungen aus Diphenyloxid und Diphenyl sowie Silikonöle.

Vorzugsweise ist jede elektrochemische Zelle von einem Metallmantel umschlossen und zwischen dem Metallmantel der elektrochemischen Zellen und dem Mantel aus mineralischem Material ist eine Schicht zur Kompensation von unterschiedlichen thermischen Ausdehnungen des mineralischen Materials und des Metalls aufgenommen. Hierdurch wird vermieden, dass entweder die elektrochemische Zelle oder der Mantel aus mineralischem Material aufgrund unterschiedlicher thermischer Ausdehnungen geschädigt wird. Um die elektrochemischen Zellen gut temperieren zu können, enthält die Schicht zur Kompensation von unterschiedlichen thermischen Ausdehnungen vorzugsweise ein gut wärmeleitendes Material. Als Material für die Schicht zur Kompensation unterschiedlicher thermischer Ausdehnung werden vorzugsweise Glasfasern, unterhalb von 300°C schmelzende Metalle oder Legierungen, oder fluorierte Wachse oder Polymere eingesetzt, wobei bei Einsatz des Wachses, des Polymers oder des niedrig schmelzenden Metalls oder der niedrig schmelzenden Legierung im Allgemeinen das Wachs oder Polymer aufgrund der Wärme im Betrieb der elektrochemischen Zellen schmilzt und so ein Spalt ausgebildet wird, in den sich die metallischen Teile der elektrochemischen Zellen bei zunehmender Temperatur ausdehnen können, wobei das geschmolzene Material aus dem Spalt zwischen Rohr und Wandung gedrückt wird. Um weiterhin einen guten Wärmeübergang zu erzielen, werden entstandene Spalte zwischen dem Mantel aus mineralischem Material und den elektrochemischen Zellen vorzugsweise mit einem guten Wärmeträger, beispielsweise einem Thermalöl oder anderen thermostabilen Füllstoffen gefüllt.

Als Wärmeträgermedium, mit dem die Kanäle oder Leitungen zur Temperierung der elektrochemischen Zellen eingesetzt werden, wird besonders bevorzugt ein Öl oder ein Salz mit einem Schmelzpunkt von weniger als 300°C eingesetzt. Bevorzugt sind jedoch Öle, da diese einfacher zu handhaben sind und anders als Salzschmelzen nicht einfrieren können. Wenn Öle eingesetzt werden, eignen sich insbesondere Thermalöle, die bis zu einer Temperatur von 350°C drucklos eingesetzt werden können. Um eine gleichmäßige Temperierung der elektrochemischen Zellen zu erhalten, sind im Kreislauf für das Wärmeträgermedium Pumpen zum Transport des Wärmeträgermediums, Speicherbehälter für das Wärmeträgermedium und Temperieraggregate, beispielsweise Wärmeübertrager, enthalten. Im Temperieraggregat kann das Wärmeträgermedium die für die Heizung der elektrochemischen Zellen notwendige Wärme aufnehmen oder die durch die Kühlung aufgegebene Wärme abgeben. Die Pumpen, Speicherbehälter und Temperieraggregate können dabei innerhalb oder außerhalb des Mantels aus mineralischem Material angeordnet sein. Für die leichtere Zugänglichkeit ist eine Positionierung außerhalb bevorzugt.

Aufgrund der hohen Temperaturen, bei denen die elektrochemischen Zellen betrieben werden, ist es notwendig, eine thermische Isolierung vorzusehen. Dabei wird der Mantel aus mineralischem Material mit einem Dämmstoff umschlossen. Dabei wird der Dämmstoff so angebracht, dass ein Großteil der Wärme über die Oberfläche des Mantels abgestrahlt wird. Nur die Feinsteuerung soll über die Temperierung mit dem Temperiermedium erfolgen. Hierdurch können zum Beispiel Schwankungen der Außentemperatur kompensiert werden. Um ein regelmäßiges Abkühlen und Aufheizen zu vermeiden, da dadurch der Mantel aus mineralischem Material geschädigt werden kann, ist es bevorzugt, jeweils nur die elektrochemischen Zellen abzuschalten, die gewartet werden müssen.

Um eine ausreichend große elektrische Spannung bereitstellen zu können, ist es bevorzugt, wenn eine Batterie mindestens zwei der vorstehend beschriebenen Vorrichtungen umfasst, die elektrisch miteinander verbunden sind. Hierbei sind für den einfacheren Transport und die bessere Handhabung die elektrisch miteinander verbundenen Module in einem gemeinsamen Container, vorzugsweise einem Normcontainer, aufgenommen.

Um Verletzungen durch Verbrennungen vorzubeugen, sind die Wandungen des Containers vorzugsweise mit einer thermischen Isolierung versehen. Als Material für die thermische Isolierung sowohl des Containers als auch des Mantels aus mineralischem Material für ein Modul können zum Beispiel Glasfasern, Mineralfasern oder jedes andere Material eingesetzt werden, das bei den an den Wandungen anfallen Temperaturen thermisch stabil ist.

Ausführungsformen der Erfindung sind in den Figuren dargestellt und werden in der nachfolgenden Beschreibung näher erläutert.

Es zeigen:
- Figur 1: eine erfindungsgemäße Vorrichtung zur Speicherung elektrischer Energie,
- Figur 2: mehrere zu einer Batterie verschaltete Vorrichtungen zur Speicherung elektrischer Energie.

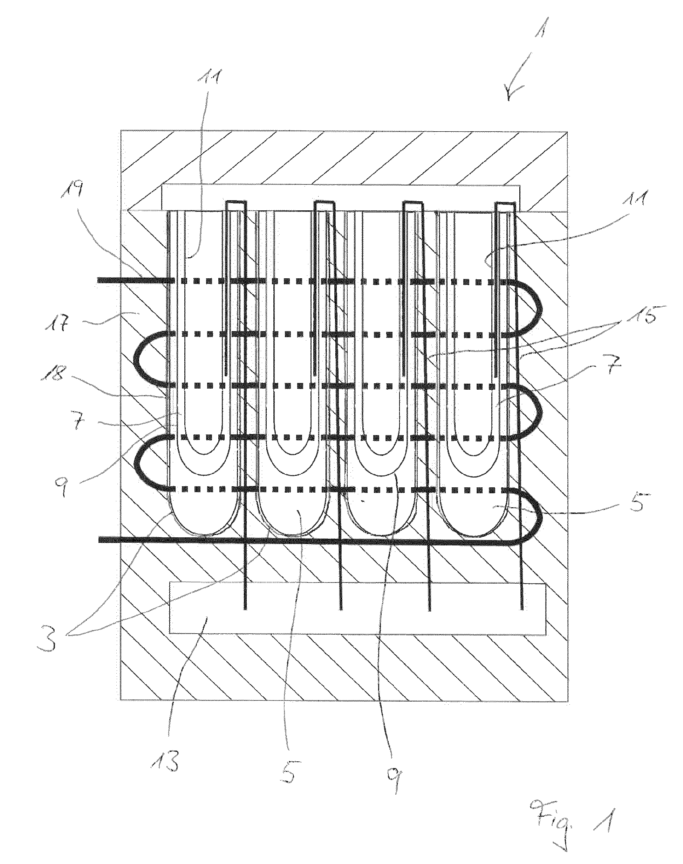

In Figur 1 ist eine erfindungsgemäße Vorrichtung zur Speicherung elektrischer Energie dargestellt.

Eine Vorrichtung 1 zur Speicherung elektrischer Energie umfasst mehrere elektrochemische Zellen 3. Die elektrochemischen Zellen 3 haben jeweils einen Raum für Kathodenmaterial 5 und einen Raum für Anodenmaterial 7, die durch einen Festelektrolyten 9 getrennt sind. Auf der zum Raum für Kathodenmaterial 5 weisenden Seite ist üblicherweise eine poröse Elektrode auf dem Festelektrolyten 9 angeordnet.

Als Kathodenmaterial wird vorzugsweise Schwefel oder Polysulfid eingesetzt und als Anodenmaterial ein Alkalimetall, vorzugsweise Natrium. Da bei einem Bruch des Festelektrolyten eine unkontrollierte Reaktion des Alkalimetalls mit dem Schwefel erfolgt, ist es bevorzugt, den Raum für das Anodenmaterial 7 möglichst klein zu gestalten. Hierzu wird vorzugsweise ein Verdränger 11 eingesetzt, durch den der Raum für das Anodenmaterial 7 auf einen Ringspalt zwischen Verdränger 11 und Festelektrolyt 9 begrenzt wird.

Um dennoch eine möglichst große Kapazität der Vorrichtung zur Speicherung elektrischer Energie 1 zu erhalten, ist ein zusätzlicher Speicher 13 für Anodenmaterial vorgesehen, der mit dem Raum für Anodenmaterial 7 verbunden ist. In der hier dargestellten Ausführungsform befindet sich der Speicher 13 für Anodenmaterial unterhalb der elektrochemischen Zellen 3. Die Verbindung des Speichers 13 für Anodenmaterial mit den jeweiligen Räumen für Anodenmaterial 7 der einzelnen elektrochemischen Zellen 3 erfolgt über Steigrohre 15. Bei Entladung der Vorrichtung zur Speicherung elektrischer Energie wird Anodenmaterial verbraucht, so dass im Raum für Anodenmaterial 7 ein Unterdruck entsteht. Durch das Steigrohr 15 wird weiteres Anodenmaterial angesaugt, so dass der Raum für Anodenmaterial 7 immer befüllt ist. Aufgrund der Förderung durch Unterdruck ist eine Pumpe für den Transport des Anodenmaterials in den Raum für Anodenmaterial 7 nicht erforderlich.

Erfindungsgemäß sind die elektrochemischen Zellen 3 und sofern vorhanden und wie hier dargestellt der Speicher 13 für Anodenmaterial von einem Mantel 17 aus einem mineralischen Material umschlossen. Der Mantel 17 aus mineralischem Material, vorzugsweise hitzebeständigem oder feuerfestem Beton, ist dabei wärmeleitend mit den elektrochemischen Zellen 3 verbunden. Hierzu ist es zum Beispiel möglich, die elektrochemischen Zellen 3 mit dem mineralischen Material zu umgießen. Um Schädigungen des mineralischen Materials des Mantels 17 zu vermeiden, ist es bevorzugt, zwischen dem Mantel 17 aus mineralischem Material und den einzelnen elektrochemischen Zellen 3 eine wärmeleitende Kompensationsschicht 18 vorzusehen. Durch diese Kompensationsschicht werden unterschiedliche Wärmedehnungen des Materials der elektrochemischen Zellen 3 und des Mantels 17 aus mineralischem Material ausgeglichen. Als Kompensationsschicht kann zum Beispiel Thermalöl eingesetzt werden.

Um die elektrochemischen Zellen 3 gleichmäßig zu temperieren sind im Mantel 17 aus dem mineralischen Material Leitungen 19 vorgesehen, durch die ein Wärmeträgermedium strömt. Als Wärmeträgermedium kann zum Beispiel wie vorstehend beschrieben ein Thermalöl oder eine Salzschmelze eingesetzt werden. Eine gleichmäßige Temperierung der elektrochemischen Zellen 3 ist notwendig, um temperaturbedingten unterschiedlichen Zellinnenwiderständen und damit verbunden unterschiedlichen Entladungs- und Ladungszuständen, die sich unterschiedlich auf die Lebensdauer der Zellen auswirken, entgegenzuwirken. Durch die Temperierung mit dem Wärmeträgermedium lassen sich die einzelnen elektrochemischen Zellen im wesentlichen auf die gleiche Temperatur, das heißt auf Temperaturen mit einem maximalen Temperaturunterschied zwischen den einzelnen Zellen im Bereich von 2 bis 15 °C temperieren.

Die Leitungen 19 für das Wärmeträgermedium können zum Beispiel aus einem metallischen Werkstoff gefertigt werden, beispielsweise Kupfer oder Edelstahl, und anschließend bei der Herstellung des Mantels 17 ebenfalls von dem mineralischen Material umgossen werden. Alternativ ist es auch möglich, die Leitungen 19 in separaten Platten aus dem mineralischen Material mit einer Stärke im Bereich von 5 bis10 cm vorzusehen, die als Ersatz für Schalungselemente bei der Herstellung des Mantels 17 eingesetzt werden und sich mit dem anschließend eingegossenen mineralischen Material bei der Herstellung des Mantels verbinden, so dass eine gute Wärmeleitung innerhalb des Mantels 17 zu den Leitungen 19 für das Wärmeträgermedium erzielt wird.

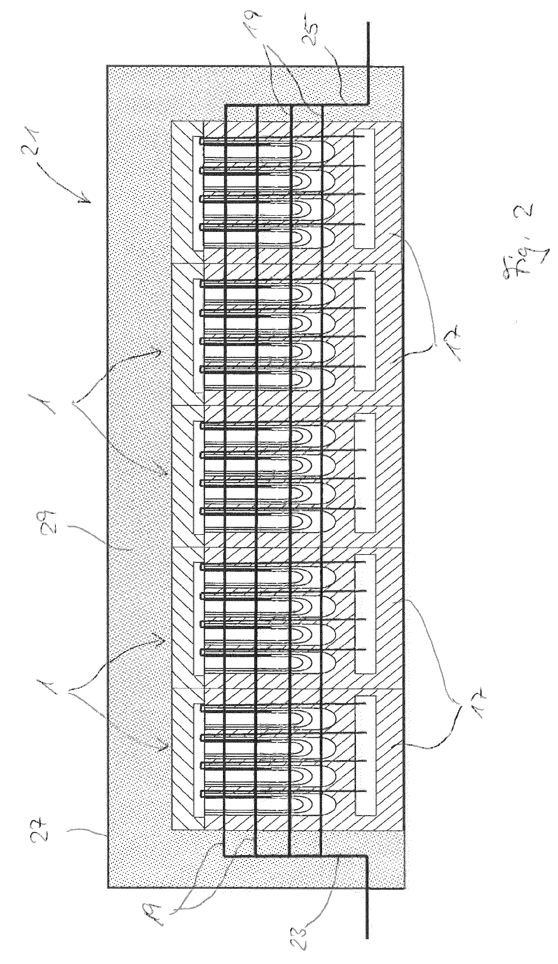

In Figur 2 ist eine Batterie dargestellt, die aus mehreren Vorrichtungen zur Speicherung elektrischer Energie aufgebaut ist.

In der hier dargestellten Ausführungsform umfasst eine Batterie 21 fünf Vorrichtungen 1 zur Speicherung elektrischer Energie, wie sie in Figur 1 dargestellt sind. Die einzelnen Vorrichtungen 1 zur Speicherung elektrischer Energie können dabei in Reihenschaltung oder in Parallelschaltung oder auch in einer Kombination aus Reihenschaltung und Parallelschaltung miteinander verbunden sein.

Um das Risiko möglicher Schädigungen an den Leitungen 19 für das Wärmeträgermedium möglichst gering zu halten, sind in der hier dargestellten Ausführungsform die Leitungen so gestaltet, dass diese durch sämtliche Mäntel 17 der einzelnen Vorrichtungen geführt werden und dabei keine Verbindungsstellen aufweisen. Dies ist zum Beispiel möglich, indem die einzelnen Module erst zusammengestellt werden und anschließend der Mantel 17 erzeugt wird. Alternativ können die Leitungen 19 auch in einem separaten Modul vorgesehen sein, das in Kontakt mit den Mänteln 17 der einzelnen Vorrichtungen 1 zur Speicherung elektrischer Energie ist. Selbstverständlich ist es alternativ auch möglich, jede Vorrichtung 1 zur Speicherung elektrischer Energie mit einem eigenen Leitungssystem zur Temperierung vorzusehen, wie dies in Figur 1 gezeigt ist.

Die Leitungen 19 für das Wärmeträgermedium können dabei wie in Figur 1 dargestellt wellenförmig oder wie in Figur 2 dargestellt linear von einem Verteiler 23 zu einem Sammler 25 verlaufen. Der lineare Verlauf ist dabei selbstverständlich nicht auf die in Figur 2 gezeigte Variante mit mehreren Vorrichtungen 1 zur Speicherung elektrischer Energie begrenzt. Eine entsprechende Gestaltung kann auch für jede einzelne Vorrichtung 1 zur Speicherung elektrischer Energie eingesetzt werden.

Zur besseren Handhabbarkeit, das heißt Lagerung und Transport der Batterien, ist es vorteilhaft, wenn eine aus mehreren Vorrichtungen 1 zur Speicherung elektrischer Energie aufgebaute Batterie 21 in einem Behälter 27 eingesetzt ist. Als Behälter 27 wird besonders bevorzugt ein Container, insbesondere ein Normcontainer, verwendet.

Aufgrund der hohen Temperaturen, bei denen die Vorrichtung 1 zur Speicherung elektrischer Energie betrieben wird, ist es weiterhin bevorzugt, wenn die Batterie 21 innerhalb des Behälters 27 mit einer thermischen Isolierung 29 umschlossen ist. Hierdurch wird sichergestellt, dass die Wandungen des Behälters 27 nicht so heiß werden, dass eine Person, die den Behälter 27 von außen berührt, verletzt wird, insbesondere Verbrennungen erleidet. Als Material für die Wärmedämmung kann zum Beispiel Mineralwolle eingesetzt werden.

### Bezugszeichenliste

- 1: Vorrichtung zur Speicherung elektrischer Energie
- 3: elektrochemische Zelle
- 5: Raum für Kathodenmaterial
- 7: Raum für Anodenmaterial
- 9: Festelektrolyt
- 11: Verdränger
- 13: Speicher für Anodenmaterial
- 15: Steigrohr
- 17: Mantel aus mineralischem Material
- 18: wärmeleitende Kompensationsschicht
- 19: Leitung für Wärmeträgermedium
- 21: Batterie
- 23: Verteiler
- 25: Sammler
- 27: Behälter
- 29: thermische Isolierung

## Patentansprüche

1. Vorrichtung zur Speicherung elektrischer Energie, umfassend mindestens zwei elektrochemische Zellen (3), die jeweils einen Raum für Anodenmaterial (7) und einen Raum für Kathodenmaterial (5) umfassen, wobei der Raum für Anodenmaterial (7) und der Raum für Kathodenmaterial (5) durch einen Festelektrolyten (9) getrennt sind, **dadurch gekennzeichnet, dass** die elektrochemischen Zellen (3) von einem Mantel (17) aus einem mineralischen Material umschlossen sind.

2. Vorrichtung gemäß Anspruch 1, **dadurch gekennzeichnet, dass** das Anodenmaterial ein Alkalimetall und das Kathodenmaterial Schwefel oder Polysulfid ist.

3. Vorrichtung gemäß Anspruch 1 oder 2, **dadurch gekennzeichnet, dass** das mineralische Material Beton ist.

4. Vorrichtung gemäß Anspruch 3, **dadurch gekennzeichnet, dass** der Beton hitzebeständiger Beton ist.

5. Vorrichtung gemäß einem der Ansprüche 1 bis 4, **dadurch gekennzeichnet, dass** der Mantel (17) aus dem mineralischen Material einen abnehmbaren Deckel aufweist oder an der Oberseite offen ist, so dass die einzelnen elektrochemischen Zellen aus dem Mantel (17) aus mineralischem Material entnommen und ausgetauscht werden können.

6. Vorrichtung gemäß einem der Ansprüche 1 bis 5, **dadurch gekennzeichnet, dass** die elektrochemischen Zellen (3) zur Herstellung des Mantels (17) aus dem mineralischen Material mit dem mineralischen Material umgossen werden oder dass der Mantel aus mineralischem Material aus vorgefertigten Modulen aufgebaut ist.

7. Vorrichtung gemäß einem der Ansprüche 1 bis 6, **dadurch gekennzeichnet, dass** der Raum für Anodenmaterial (7) mit einem Speicher (13) für Anodenmaterial verbunden ist und der Speicher (13) für Anodenmaterial ebenfalls von dem Mantel (17) aus mineralischem Material umschlossen ist.

8. Vorrichtung gemäß einem der Ansprüche 1 bis 7, **dadurch gekennzeichnet, dass** die Räume für Anodenmaterial (7) von jeweils mindestens zwei elektrochemischen Zellen (3) mit einem gemeinsamen Speicher (13) für Anodenmaterial verbunden sind.

9. Vorrichtung gemäß einem der Ansprüche 1 bis 8, **dadurch gekennzeichnet, dass** im Mantel (17) aus mineralischem Material mindestens ein Aufnahmebehälter aufgenommen ist, in den bei einer möglichen Leckage das Anodenmaterial, das Kathodenmaterial und/oder das Reaktionsprodukt aus Anodenmaterial und Kathodenmaterial ablaufen kann.

10. Vorrichtung gemäß einem der Ansprüche 1 bis 9, **dadurch gekennzeichnet, dass** in dem Mantel (17) aus mineralischem Material Kanäle (19) ausgebildet sind, die von einem Wärmeträgermedium zur Temperierung der elektrochemischen Zellen (3) durchströmt sind.

11. Vorrichtung gemäß Anspruch 6 und 10, **dadurch gekennzeichnet, dass** die Kanäle (19), die von einem Wärmeträger zur Temperierung der elektrochemischen Zellen (3) durchströmt sind, in separaten Modulen ausgebildet sind, die mit den übrigen Modulen zur Bildung des Mantels (17) aus dem mineralischen Material thermisch leitend verbunden sind.

12. Vorrichtung gemäß einem der Ansprüche 1 bis 11, **dadurch gekennzeichnet, dass** jede elektrochemische Zelle (3) von einem Metallmantel umschlossen ist und zwischen dem Metallmantel der elektrochemischen Zellen (3) und dem Mantel (17) aus mineralischem Material eine Schicht (18) zur Kompensation von unterschiedlichen thermischen Ausdehnungen des mineralischen Materials und des Metalls aufgenommen ist.

13. Vorrichtung gemäß Anspruch 12, **dadurch gekennzeichnet, dass** die Schicht zur Kompensation von unterschiedlichen thermischen Ausdehnungen ein gut wärmeleitendes Material enthält.

14. Batterie umfassend mindestens zwei miteinander elektrisch verbundene Vorrichtungen (1) gemäß einem der Ansprüche 1 bis 13 wobei die mindestens zwei miteinander elektrisch verbundenen Vorrichtungen (1) in einem gemeinsamen Behälter (27) aufgenommen sind.

15. Batterie gemäß Anspruch 14, **dadurch gekennzeichnet, dass** die Wandungen des Behälters (27) mit einer thermischen Isolierung (29) versehen sind.
